Europäisches Patentamt

European Patent Office

Office européen des brevets

(19)

(11) Publication number: **0 143 126**
**A1**

(12) **EUROPEAN PATENT APPLICATION**

(21) Application number: 83307113.7

(22) Date of filing: 21.11.83

(51) Int. Cl.⁴: **C 08 C 1/15**

(43) Date of publication of application: 05.06.85
Bulletin 85/23

(84) Designated Contracting States: **DE FR GB IT NL**

(71) Applicant: **SUMITOMO CHEMICAL COMPANY, LIMITED,
15 Kitahama 5-chome Higashi-ku, Osaka-shi
Osaka 541 (JP)**

(72) Inventor: **Ura, Shigeru, 24-13, Sakuragaoka-1-chome
Kanmakicho, Kitakatsuragi-gun Nara-ken (JP)**
Inventor: **Horiuchi, Hiroshi, 10-3-328,
Sonehigashinocho-2-chome, Toyonaka-shi Japan (JP)**
Inventor: **Tokugawa, Yoshiharu, 6-15, Nanguucho,
Ashiya-shi (JP)**

(74) Representative: **Myerscough, Philip Boyd et al, J.A.Kemp
& Co. 14, South Square Gray's Inn, London, WC1R 5EU
(GB)**

(54) Process for coagulating synthetic rubber latex.

(57) A process for coagulating a synthetic rubber latex comprises adding an aqueous solution of a polyalkylenepolyamine-epihalohydrin copolymer to a synthetic rubber latex the pH of which has been adjusted to 1.3 to 7.

EP 0 143 126 A1

PROCESS FOR COAGULATING SYNTHETIC RUBBER LATEX

This invention relates to a process for effective coagulation of a synthetic rubber latex, comprising adding an aqueous solution of a polyalkylenepolyamine-epihalohydrin copolymer to the synthetic rubber latex.

In the production of synthetic rubber by emulsion polymerization, a latex of synthetic rubber is inevitably formed. In order to convert this latex into non-agglomerative rubber crumbs, it is necessary to coagulate rubber particles present in the latex. It is well known that for achieving the coagulation of synthetic rubber particles there are used various coagulants including inorganic salts, e.g. sodium chloride, and organic high molecular compounds, e.g. polyethyleneimine, dimethylamine-epichlorohydrin copolymer, dicyandiamide-formaldehyde condensation product, and cation-modified starch.

However, when any of these coagulants is used, there arises a problem such that; complete coagulation of the rubber particles in the latex is impossible or if possible, necessitates the addition of a greater amount of coagulant; rubber crumbs produced fuse together, growing into massive aggregates; and this makes it markedly difficult to wash off, in the after-treatment step, such inclusions contained in the massive aggregates as a polymerization catalyst residue, emulsifier, and coagulation auxiliary, e.g. an inorganic salt; or the pH and temperature

of the rubber latex, and the amount of inorganic salt to be added must be strictly controlled so as to optimize the porosity of the crumb rubber for the purpose of facilitating the drying in the next operation step.

Under the circumstances, the present inventors made intensive studies for solving various problems in the coagulation of synthetic rubber latex. As a result, it was found that; by adding an aqueous solution of a polyalkylenepolyamine-epihalohydrin copolymer as a coagulant to a pH-range-adjusted latex of synthetic rubber, the coagulation of the latex particles becomes possible with an extremely small amount of coagulant as compared with the processes of adding conventional coagulants; and this coagulant can be used in a wide range of pH values, gives a crumb rubber which exhibits an appropriate aggregation and porosity and hence a good washability and dryability also gives a colorless serum, and has no adverse effect on physical properties of the end product rubber. Based on this finding, this invention has been accomplished.

An object of this invention is to provide a process for effective coagulation of a synthetic rubber latex.

Other objects and advantages of this invention will be apparent from the following descriptions.

According to this invention, there is provided a process for coagulating a synthetic rubber latex, which comprises adding an aqueous solution of a polyalkylenepolyamine-epihalohydrin copolymer to the synthetic rubber latex adjusted to a pH of 1.3 to 7.

The aqueous solution of a polyalkylenepolyamine-epihalohydrin copolymer used as a coagulant in this invention is usually obtained in the form of an aqueous solution containing 20 to 80% by weight of solids by the reaction of a polyalkylenepolyamine and an epihalohydrin in a molar ratio of 1 : 0.3 - 2.5, preferably 1 : 0.5 - 1.5, at a reaction temperature of 20 to 80°C for 30 minutes to 10 hours, where water is added to the reaction system at any desired time; before, during, or after the reaction.

Polyalkylenepolyamines suitably used herein include, for example, diethylenetriamine, triethylenetetramine, tetraethylenepentamine, and imino-bis(propylamine). These compounds may be used alone or in combination. Examples of the epihalohydrin are epichlorohydrin and epibromohydrin, the former being preferable.

The aqueous solution of such a polyalkylenepolyamine-epihalohydrin copolymer used in this invention, is desired to have a viscosity of at least 30 cps at 25°C when the solution contains 50% by weight of solids. When the viscosity is less than 30 cps, the expected effect often cannot be achieved. There is no particular restriction on the upper limit of the viscosity, but viscosities of the commonly used solutions are up to 2000 cps at 25°C for 50% by weight of solid content. There is a tendency for the solutions of viscosities over 2000 cps to be inferior in the stability of viscosity on preserving; that is, the viscosity exceeding 2000 cps often increases during storage of the solution, resulting in gelation and causing a trouble during survice. Accordingly, the solution having such a high viscosity needs to be stored at a low temperatures or used in an extremely short period of time after preparation thereof.

The amount of the aqueous solution of the polyalkylenepolyamine-epihalohydrin copolymer to be added is not particularly limited, provided that the amount is enough to coagulate a given synthetic rubber latex. While optimum amounts of the solution vary depending upon the nature and pH of the synthetic rubber latex, the liquid temperature during coagulation, the presence or absence of a salt, the quantity of the salt if present, etc., the solution is usually added in amounts of at least 0.005 part, desirably at least 0.01 part, preferably at least 0.02 part, by weight as solids per 100 parts by weight of solids in the synthetic rubber latex. The upper limit of the amount, though also not particularly limited, is usually 5 parts, desirably 1 part, by weight (on the above basis), since the use of a too large amount of coagulant is uneconomical in as much as the effect thereof is not so large as that corresponding to the increased amount.

The synthetic rubber latex to which the aqueous solution of the polyalkylenepolyamine-epihalohydrin copolymer is to be added needs to have a pH of 1.3 to 7, preferably 1.5 to 6. Since the usual synthetic rubber latex is alkaline, the pH of the latex is generally adjusted in advance by addition of an acid to be brought into the above range. The acid used for this purpose may be either inorganic or organic, including, for example, sulfuric acid, hydrochloric acid, acetic acid, and oxalic acid. When the pH of the synthetic rubber latex to be treated is over 7, the coagulating effect is poorer and a large amount of coagulant is required, resulting in worse economy. The pH less than 1.3 is also uneconomical, since in this case no enhancement of the coagulating effect is found and merely the acid consumption increases. Both the cases are undesirable.

In this invention, salts hitherto known can be used together with the present coagulant solution for the purpose of carrying out the coagulation more effectively. Such salts are water-soluble alkali metal salts of inorganic acids or organic acids, including alkali metal salts of, for example, hydrochloric acid, sulfuric acid, phosphoric acid, nitric acid, acetic acid, citric acid, malic acid, oxalic acid, and maleic acid. The salts may be used alone or in combination of two or more. Among them, sodium chloride may be usually employed.

These salts are generally added each in amounts of 0 to 20 parts by weight based on 100 parts by weight of solids in the synthetic rubber latex. The amount exceeding 20 parts by weight is undesirable since the effect obtained is not so large as that corresponding to the amount.

The synthetic rubber latex referred to in this invention includes styrene-butadiene copolymer latex, acrylonitrile-butadiene copolymer latex, polybutadiene latex, ethylene-propylene copolymer latex, polyisoprene latex, and carboxylated latexes of these polymers. Particularly, when the rubber particle concentration in the latex is 10% by weight or more, a good coagulating effect is obtained.

When the synthetic rubber latex is coagulated according to the method of this invention, there is no particular restriction upon the manner or order of the pH adjustment of the latex, addition of the aqueous solution of the polyalkylenepolyamine-epihalohydrin copolymer, or addition of the salt. The temperature of the synthetic rubber latex during coagulation also can be selected from a range as wide as 0° to 100°C, preferably 20° to 90°C, but it is advantageous in view of properties of the coagulum to carry out the coagulation at a temperature of 30°C or higher.

This invention is further illustrated below referring to the following Examples and Comparative Examples. However, the invention is not limited to these Examples.

The coagulants used in these Examples and Comparative Examples are as follows:

Resin A:

Diethylenetriamine (103 g, 1 mole) and water (140 g) were charged in a 3-necked flask equipped with a dropping funnel, stirrer, and thermometer. While keeping the temperature at 60°C with stirring the mixture, epichlorohydrin (92.5 g, 1 mole) was added to the mixture dropwise from the dropping funnel. After 4 hours' reaction at the same temperature, an aqueous solution of diethylenetriamine-epichlorohydrin copolymer containing 58 wt % of solids was obtained.  When the solid content of the aqueous solution was adjusted to 50 wt %, the viscosity of the solution was 75 cps at 25°C.

Resins B to J:

Using the various amines shown in Table 1 and epichlorohydrin, aqueous solutions of respective amine-epichlorohydrine copolymers were prepared in the same manner as in the case of Resin A.  Viscosities at 25°C of the aqueous solutions adjusted to a solid content of 50 wt % are given in Table 1.

The abreviations of the amines in Table 1 represent the following:

DETA: Diethylenetetramine

TETA: Triethylenetetramine

TEPA: Tetraethylenepentamine

DMA: Dimethylamine

Table 1

| Resin No. | Reactant | | Viscosity of copolymer solu- tion prepared (cps) |
|---|---|---|---|
| | Amine | Molar ratio of epichlorohydrin to amine | |
| Resin B | DETA | 1.2 | 90 |
| " C | " | 1.4 | 150 |
| " D | TETA | 0.8 | 160 |
| " E | " | 1.0 | 180 |
| " F | " | 1.2 | 250 |
| " G | TEPA | 0.8 | 270 |
| " H | " | 1.0 | 330 |
| " I | " | 1.2 | 500 |
| " J | DMA | 0.87 | 100 |

Examples 1 to 9 and Comparative Example 1

Sulfuric acid was added to a styrene-butadiene copolymer latex (grade: 1500) at about 50°C to adjust the pH to about 4. A coagulant was added to each sample of the resulting latex. After stirring for 2 minutes, the mixture was separated by using a 60-mesh wire gauze into a coagulated rubber (floated on the liquid layer) and a liquid layer (referred to as serum water). The turbidity of the serum water was measured in accordance with JIS K-0101 by using a turbidimeter (supplied by Nippon Fine Optics Co., Ltd.) to evaluate the degree of coagulation of the latex. When this serum water is of very low

:urbidity, viz. very clear, this means that rubber latex particles in emulsified form did not remain in the serum water and hence the latex has been coagulated completely. The coagulated rubber was examined for porosity (surface porosity or roughness) and particle size, by visual observation, and the suitability of the coagulated rubber in an aftertreatment step in the synthetic rubber production process was evaluated with respect to the porosity and particle size. The evaluation criteria are as follows:

Good: Excellent in the suitability.

Bad: Slightly inferior in the suitability.

Very bad: Inferior in the suitability.

The results are summarized in Table 2.

The added amounts of coagulant and sodium chloride in the following Tables are the respective solid quantities (wt %) based on the solid rubber quantity in the synthetic rubber latex.


Examples 10 to 12 and Comparative Examples 2 to 4

Coagulation and product evaluation tests were conducted in the same manner as in Examples 1 to 9 on sodium chloride-combined coagulant systems using the same styrene-butadiene latex as in Examples 1 to 9. Results are summarized in Table 3.

Table 2

| | Coagulant (wt %) | | pH of latex | Turbidity of serum (ppm) | State of coagulated rubber | |
|---|---|---|---|---|---|---|
| | Resin No. | Amount of resin (wt %) | | | Porosity | Particle size |
| Example 1 | Resin - A | 0.05 | 4.05 | 35 | Good | Good |
| " 2 | " B | 0.05 | 4.00 | 20 | " | " |
| " 3 | " C | 0.05 | 4.02 | 12 | " | " |
| " 4 | " D | 0.05 | 3.98 | 15 | " | " |
| " 5 | " E | 0.05 | 4.05 | 9 | " | " |
| " 6 | " F | 0.05 | 4.03 | 12 | " | " |
| " 7 | " G | 0.05 | 4.00 | 7 | " | " |
| " 8 | " H | 0.05 | 3.95 | 9 | " | " |
| " 9 | " I | 0.05 | 4.05 | 13 | " | " |
| Comparative Example 1 | " J | 0.05 | 4.02 | Cloudy | Bad | Bad |
| Blank | - | - | 3.95 | Cloudy | Very bad | Very bad |

Table 3

| | Coagulant (wt %) | | | pH of latex | Turbidity of serum (ppm) | State of coagulated rubber | |
|---|---|---|---|---|---|---|---|
| | Resin No. | Amount of resin (wt %) | Amount of NaCl (wt %) | | | Porosity | Particle size |
| Example 10 | Resin - B | 0.04 | 4.0 | 3.95 | 5 | Good | Good |
| " 11 | " | 0.03 | " | 3.98 | 12 | " | " |
| " 12 | " | 0.025 | " | 4.02 | 26 | " | " |
| Comparative Example 2 | Resin - J | 0.04 | 4.0 | 4.00 | 150 | Bad | Bad |
| " 3 | " | 0.03 | " | 3.95 | Cloudy | Bad | Very bad |
| " 4 | " | 0.025 | " | 3.98 | Cloudy | Very bad | Bad |
| Blank | - | - | 4.0 | 4.05 | Cloudy | Very bad | Bad |

0143126

CLAIMS

1.    A process for coagulating a synthetic rubber latex by adding thereto an amine-epihalohydrin copolymer as coagulant, characterised by adding an aqueous solution of a polyalkylenepolyamine-epihalohydrin copolymer as coagulant to a synthetic rubber latex the pH of which has been adjusted to 1.3 to 7.

2.    A process according to claim 1, wherein the synthetic rubber latex is a styrene--butadiene copolymer latex, acrylonitrile-butadiene copolymer latex, polybutadiene latex, ethylene-propylene copolymer latex, polyisoprene latex or carboxylated latex of any of these polymers.

3.    A process according to claim 1 or 2, wherein the polyalkylenepolyamine is at least one of diethylenetriamine, triethylene-tetramine, tetraethylenepentamine and imino-bis(propylamine).

4.    A process according to claim 1, 2 or 3, wherein the epihalohydrin is epichlorohydrin.

5.    A process according to any one of the preceding claims, wherein the amount of the aqueous solution of the polyalkylenepolyamine-epihalohydrin copolymer is 0.005 to 5 parts by weight as solid per 100 parts by weight of solid in the synthetic rubber latex.

6.    A process according to any one of the preceding claims, wherein the polyalkylenepolyamine-epihalohydrin copolymer is used in conjunction with at least one water-soluble alkali metal salt of an inorganic or organic acid.

7.    A process according to claim 6, wherein at least one alkali metal salt of hydrochloric acid, sulfuric acid, phosphoric acid or nitric acid is used.

0143126

8.   A process according to claim 6, wherein at least one alkali metal salt of acetic acid, citric acid, malic acid, oxalic acid or maleic acid is used.

9.   A process according to claim 6, 7 or 8, wherein the amount of alkali metal salt is up to 20 parts by weight based on 100 parts by weight of solids in the synthetic rubber latex.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | CHEMICAL ABSTRACTS, vol. 95, no. 22, 30th November 1981, page 97, no. 188949e, Columbus, Ohio, US; & CS - A - 186 814 (STEFAN UHRINA et al.) 15-02-1981 * Abstract *<br><br>--- | | C 08 C 1/15 |
| A | FR-A-2 314 199 (NALCO)<br><br>* Claim 1 *<br><br>--- | | |
| A | GB-A-1 535 497 (SOCFIN COMP. BERHAD)<br>* Claim 6 *<br><br>--- | | |
| A | CHEMICAL ABSTRACTS, vol. 100, no. 16, 16th April 1984, page 69, no. 122577x, Columbus, Ohio, US; & JP - A - 58 194 525 (SUMITOMO CHEMICAL CO., LTD.) 12-11-1983<br><br>----- | | **TECHNICAL FIELDS SEARCHED (Int. Cl. 3)**<br><br>C 08 C |

The present search report has been drawn up for all claims

| Place of search | Date of completion of the search | Examiner |
|---|---|---|
| THE HAGUE | 21-06-1984 | VAN HUMBEECK F.W.C. |